# EUROPÄISCHE PATENTSCHRIFT

(11) **EP 0 467 103 B1**
(45) Veröffentlichungstag und Bekanntmachung des Hinweises auf die Patenterteilung: **21.12.1994**
(21) Anmeldenummer: 91110347.1
(22) Anmeldetag: 22.06.1991
(51) Int. Cl.: C08J 3/03, C08J 3/16, C04B 24/26

(54) **Wässrige Polymerisat-Dispersionen und hieraus durch Sprühtrocknung hergestellte Polymerisat-Pulver**
Aqueous polymer dispersions and polymer powder obtained by their spray drying
Dispersions aqueuses de polymères et poudre de polymère obtenue par leur séchage par pulvérisation

(30) Priorität: 03.07.1990 DE 4021216
(43) Veröffentlichungstag der Anmeldung: 22.01.1992
(73) Patentinhaber: BASF Aktiengesellschaft, 67063 Ludwigshafen (DE)
(72) Erfinder: Franzmann, Gernot, Dr., W-6719 Bobenheim (DE); Petri, Rolf, W-6710 Frankenthal (DE); Pitteroff, Walter, Dr., W-6719 Bobenheim (DE)

(56) Entgegenhaltungen:
- EP-A- 0 078 449
- US-A- 3 100 156
- US-A- 4 022 737
- US-A- 4 386 172
- CHEMICAL ABSTRACTS, vol. 105, no. 4, Juli 1986, Columbus, Ohio, US; abstract no. 28869A, ASAI DAIJIRO ET AL: 'CEMENT MORTAR LINING OF IRON ALLOY PIPES' & JP-A-6103745

## Beschreibung

Die vorliegende Erfindung betrifft wäßrige Polymerisat-Dispersionen, die keine wasserlösliche Epoxidverbindung aufweisen, enthaltend
I als disperse Phase ein filmbildendes Dispersionspolymerisat und
II in der wäßrigen Phase 5 bis 40 Gew.-%, bezogen auf die Gesamttrockenmasse an I und II, eines ganz oder teilweise neutralisierten wasserlöslichen Copolymerisates aus
   a) 50 bis 80 mol-% einer olefinisch ungesättigten Mono- oder Dicarbonsäure, eines Anhydrids dieser Säuren oder eines Gemisches dieser Monomeren,
   b) 20 bis 50 mol-% eines C₃- bis C₁₂-Alkens, Styrol oder eines Gemisches dieser Monomeren und
   c) 0 bis 10 mol-% weiteren radikalisch polymerisierbaren Monomeren.

Die Erfindung betrifft weiterhin die durch Sprühtrocknung von wäßrigen Polymerisat-Dispersionen, die
I als disperse Phase ein filmbildendes Dispersionspolymerisat und
II in der wäßrigen Phase 5 bis 40 Gew.-%, bezogen auf die Gesamttrockenmasse an I und II, eines ganz oder teilweise neutralisierten wasserlöslichen Copolymerisates aus
   a) 50 bis 80 mol-% einer olefinisch ungesättigten Mono- oder Dicarbonsäure, eines Anhydrids dieser Säuren oder eines Gemisches dieser Monomeren,
   b) 20 bis 50 mol-% eines C₃- bis C₁₂-Alkens, Styrol oder eines Gemisches dieser Monomeren und
   c) 0 bis 10 mol-% weiteren radikalisch polymerisierbaren Monomeren
enthalten, erhaltenen redispergierbaren Polymerisatpulver sowie die Verwendung der erfindungsgemäßen Polymerisat-Dispersionen oder der in Wasser redispergierten erfindungsgemäßen Polymerisatpulver als Klebstoffe oder als Bindemittel für wasserfeste Kunststoffputze und Anstrichstoffe.

Wäßrige Polymerisat-Dispersionen und ihre durch Sprühtrocknung erhaltenen Polymerisatpulver sowie ihre Verwendung zur Herstellung von Haftklebebeschichtungen und als Zuschläge zu hydraulischen Bindemitteln sind allgemein bekannt. Die Zuschläge verbessern die Druck-, Biege- und Zugfestigkeit der Baustoffe, denen sie zugesetzt werden.

Die Zuschläge werden aus Gründen der Lagerhaltungs- und Transportkosten vorzugsweise in Form ihrer redispergierbaren Polymerisat-Pulver eingesetzt, und zwar vor allem in Form von Trockenzubereitungen mit den übrigen Anstrich- und Putzbestandteilen. Solche Trockenzubereitungen werden erst kurz vor ihrer Verwendung mit Wasser angerührt.

Üblicherweise liegt die Glastemperatur der in der wäßrigen Dispersion enthaltenen Dispersionspolymerisate unterhalb von 50°C, was zu Schwierigkeiten beim Sprühtrocknen führt, weil das Pulver hierbei zum Verklumpen neigt.

Man kann diesem Mangel durch Mitverwendung von Sprühhilfsmitteln, z.B. feinverteilter Kieselsäure, abhelfen, jedoch sind die auf diese Weise hergestellten Pulver weniger gut redispergierbar und auch nur begrenzt lagerfähig.

Der vorliegenden Erfindung lagen daher neue wäßrige Polymerisat-Dispersionen als Aufgabe zugrunde, die bei unmittelbarer Verwendung als Bindemittel für Anstrichstoffe und Putze deren Wasserfestigkeit bewirken und lagerstabile, in Wasser gut redispergierbare Polymerisat-Pulver ergeben.

Demgemäß wurden die eingangs definierten Polymerisat-Dispersionen gefunden.

Außerdem wurden die eingangs definierten in Wasser gut redispergierbaren lagerstabilen Polymerisat-Pulver gefunden sowie die Verwendung der erfindungsgemäßen Polymerisat-Dispersionen oder der erfindungsgemäßen Polymerisat-Pulver als Haftkleber und als Zuschläge zu hydraulischen Bindemitteln und Anstrichstoffen.

Die Komponente I kann grundsätzlich aus einem beliebigen filmbildenden Homo- oder Copolymerisat bestehen. Derartige Dispersionspolymerisate sind bekannt oder in bekannter Weise erhältlich. Näheres hierzu ist den DE-A 22 38903, 3 143 070 und 3 143 071 zu entnehmen.

Im Falle der Homopolymerisate ist die Komponente I beispielsweise aus Butadien, Styrol, Vinylchlorid, Vinylidenchlorid, einem C₄- bis C₈-Alkylacrylat oder -methacrylat oder einem Vinylester einer C₂- bis C₁₂-Carbonsäure wie Essigsäure, Propionsäure oder Laurinsäure aufgebaut.

Als weitere Monomere kommen jeweils die übrigen der bereits genannten Monomeren sowie folgende Monomere in Betracht:
- Acrylnitril und Methacrylnitril
- ungesättigte C₃- bis C₆-Mono- oder Dicarbonsäuren und Itaconsäure
- Maleinsäureanhydrid und Itaconsäureanhydrid
- die Amide, N-Methylolamide und N-(C₁-C₄-Alkyl)-amide der vorgenannten Säuren, insbesondere der Acrylsäure und Methacrylsäure
Bevorzugt werden jedoch Copolymerisate aus
- 20 bis 80 Gew.-% eines oder mehrerer der vorgenannten Acrylsäure- und Methyacrylsäureester,
   20 bis 80 Gew.-% Styrol und
   0 bis 40 Gew.-% weiterer Monomerer
- 5 bis 40 Gew.-% eines oder mehrerer der vorgenannten Acrylsäure- und Methacrylsäureester
   60 bis 95 Gew.-% eines oder mehrerer der vorgenannten Vinylester und
   0 bis 30 Gew.-% weiterer Monomerer
- 40 bis 80 Gew.-% eines oder mehrerer der vorgenannten Vinylester
   20 bis 60 Gew.-% Vinylchlorid
   0 bis 10 Gew.-% weiterer Monomerer
- 50 bis 95 Gew.-% eines oder mehrerer der vorgenannten Vinylester,
   5 bis 15 Gew.-% Ethylen
   0 bis 40 Gew.-% Vinylchlorid und
   0 bis 40 Gew.-% weiterer Monomerer
- 30 bis 70 Gew.-% Butadien
   70 bis 30 Gew.-% Styrol
   0 bis 30 Gew.-% eines oder mehrerer der vorgenannten Acrylsäure- oder Methycrylsäureester und
   0 bis 30 Gew.-% weiterer Monomerer.

Das Dispersionspolymerisat I soll vorzugsweise eine Glastemperatur zwischen (-60) und und 50°C, besonders zwischen (-60) und 25°C aufweisen. Durch die Wahl der Monomeren und von deren Gewichtsanteilen hat es der Fachmann in üblicher Weise in der Hand, diese Bedingung zu erfüllen.

Als Comonomere a) der Komponente II kommen vorzugsweise die vorgenannten Säuren und deren Anhydride in Betracht, darunter besonders die Acrylsäure, Methacrylsäure und Itaconsäure sowie Maleinsäureanhydrid.

Als Comonomere b) der Komponente II eignen sich neben Styrol vor allem Propen, Buten, Isobuten und Diisobuten.

Als weitere Comonomere c) der Komponente II eignen sich beispielsweise alle diejenigen, die als Monomere für die Komponente I des Dispersionspolymerisates genannt wurden, soweit diese nicht bereits unter die Definition von II a) oder II b) fallen.

Die Molverhältnisse der Comonomeren im Copolymerisat der Komponente II betragen 50 - 80 mol-% an Komponente II a) und 20 - 50 mol-% an Komponente II b), insbesondere aber 50 mol-% an II a) und b).

Man stellt die Komponente II zweckmäßigerweise wie üblich durch Lösungs- oder Substanzpolymerisation und anschließende vollständige oder partielle Neutralisation des Polymerisates her.

Bevorzugte Basen zur Neutralisation sind Natronlauge und basische Natriumverbindungen wie Natriumcarbonat und Natriumacetat sowie daneben Ammoniak.

Die Menge an II beträgt 5 bis 40 Gew.-%, vorzugsweise 20 bis 30 Gew.-%, bezogen auf die Gesamttrockenmasse an I und II in der erfindungsgemäßen Polymerisat-Dispersion bzw. den erfindungsgemäßen Polymerisat-Pulvern.

Man kann die erfindungsgemäßen Polymerisat-Dispersionen z.B. in der Weise herstellen, daß man die Dispersion I und die Lösung II wie üblich getrennt voneinander bereitet und beide Komponenten sodann vermischt. Alle Polymerisationen können in an sich bekannter Weise vorgenommen werden, z.B. mit Azoisobutyronitril oder Dibenzoylperoxid als Radikalstarter und, soweit es sich um Dispersionspolymerisate handelt, mit üblichen Emulgatoren in den jeweils hierfür üblichen Mengen. Geeignete Emulgatoren sind unter anderem Laurylsulfat, Natrium-n-dodecylsulfonat, Natrium-n-tetradecylsulfonat und Natrium-n-dodecylbenzolsulfonat sowie besonders ethoxylierte Alkohole oder Phenole.

Die erfindungsgemäßen Polymerisat-Dispersionen können ferner noch übliche Zusatzmittel wie Schutzkolloide, z.B. Polyvinylalkohol oder Polyvinylpyrrolidon sowie gegebenenfalls auch Antiblockmittel wie hochdisperse Kieselsäure in den hierfür üblichen Mengen enthalten.

Das Versprühen der aus den Komponenten I und II bestehenden wäßrigen Polymerisat-Dispersionen kann in an sich üblicher Weise im Sprühtrockner unter Verwendung von Einstoff- bzw. Mehrstoffdüsen oder von Zerstäuberscheiben bei Temperaturen von 100°C bis 200°C durchgeführt werden. Die Komponente II verhindert dabei ein unerwünschtes Verfilmen der Teilchen.

Das Abscheiden der getrockneten Polymerisat-Pulver erfolgt in an sich üblicher Weise, insbesondere unter Verwendung von Zyklonen oder Filterabscheidern.

Die erhaltenen Polymerisat-Pulver sind in Wasser gut redispergierbar und können bei Raumtemperatur problemlos gelagert werden.

Die erfindungsgemäßen wäßrigen Polymerisat-Dispersionen und die erfindungsgemäßen in Wasser redispergierten Polymerisat-Pulver sind gute Klebstoffe für Kunststoffe, Holz und Papier, aber auch für mineralische Baustoffe wie Beton und Ziegelsteine.

Besonders gut eignen sich die erfindungsgemäßen Polymerisat-Dispersionen als Bindemittel für wasserfeste Anstriche und Putze, die mineralische Baustoffe enthalten, weil sich die in diesen Stoffen enthaltenen Kationen wie Calcium- und/oder Aluminium-Kationen mit den Säureanionen der Komponente II zu unlöslichen Verbindungen umsetzen.

Zur Herstellung derartiger wasserfester Putze oder Anstriche kann man auch die Salze mehrwertiger Metallkationen, vorzugsweise die des Magnesiums, Calciums und Aluminiums zusetzen.

Die Trockenzubereitungen aus den erfindungsgemäßen Polymerisat-Pulvern und den Anstrich- oder Baustoffen sind von besonderer Bedeutung, weil sie besser gelagert und transportiert werden können.

Die Trockenzubereitungen enthalten vorzugsweise 3 bis 10 Gew.-% der erfindungsgemäßen Polymerisatpulver, bezogen auf die Gesamtmenge der Zubereitung.

Werden die erfindungsgemäßen wäßrigen Polymerisat-Dispersionen zur Bereitung der Putz- oder Anstrichmasse verwendet, so beträgt deren Polymeranteil vorzugsweise 10 bis 50 Gew.-%.

Die Zubereitungen können außerdem Sand, Rauhputzsplitt oder Pigmente in den hierfür üblichen Mengen enthalten.

Die Trockenzubereitungen werden erst kurz vor Gebrauch mit Wasser versetzt und nach gutem Durchmischen in üblicher Weise verarbeitet.

### Beispiel

### a) Herstellung einer Polymerisatdispersion I

Aus einer Mischung aus 400 kg Styrol, 600 kg Butylacrylat und 20 kg Acrylamid wurde im Laufe von 4 Stunden bei 80°C in üblicher Weise ein Dispersionspolymerisat hergestellt. Die Menge des Wassers betrug 1000 kg; als Radikalstarter diente Kaliumpersulfat und als Emulgator wurde ein ethoxyliertes und partiell sulfatiertes Phenol mit dem Ethoxylierungsgrad 25 verwendet.

### b) Herstellung einer Polymerisatkomponente II

Zu 1793 kg wasserfreiem Diisobuten wurden bei 160°C und einem Druck von 2 bis 2,5 bar im Verlaufe von 4 Stunden unter Stickstoffatmosphäre 1700 kg geschmolzenes Maleinsäureanhydrid, das eine Temperatur von 80°C hatte, zugesetzt. Gleichzeitig erfolgte die Zugabe eines Gemisches aus 167 kg Diisobuten und 100 kg Di-tert.-butylperoxid über eine Zeitspanne von 5 Stunden. Während dieser Zeitdauer wurde die Temperatur bei 160°C gehalten, und anschließend wurde das Gemisch noch 1 Stunde bei dieser Temperatur nachpolymerisiert.

Anschließend wurde der Druck im Reaktionskessel auf 0,1 bar gesenkt, wobei Reste von nicht umgesetztem Diisobuten abdestillierten. Bei der Reduktion des Druckes wurde darauf geachtet, daß die Temperatur des Polymerisats stets größer als 135°C war.

Das auf diese Weise erhaltene Polymerisat wurde über eine Zeitdauer von 2 Stunden mit 2800 l 25 %iger Natronlauge vollständig neutralisiert und anschließend mit 2500 l Wasser versetzt. Während der Neutralisationsreaktion wurde der Druck bei 4 bar und die Temperatur bei 135°C gehalten. Bei dieser Temperatur wurde 2 Stunden nachgerührt.

### c) Herstellung einer Mischung aus I und II

200 kg der Lösung II (Feststoffgehalt 90 kg) wurden mit 50 kg der Dispersion I (Feststoffgehalt 30 kg) bei Raumtemperatur vermischt.

Diese Mischung eignete sich unmittelbar zur Herstellung Mineralstoffe enthaltender Putz- und Anstrichmittel. Die hiermit erzielten Putze und Anstriche erwiesen sich als sehr wasserfest.

### d) Herstellung eines Polymerisatpulvers

In einem handelsüblichen Zerstäubungstrockner der Firma IWK wurden 80 kg/h der Polymerisat-Dispersionsmischung mit einem Luftdurchsatz von 2300 m³/h bei 120° sprühgetrocknet. Das angefallene Pulver wurde in einem Zyklon abgeschieden.

Das reinweiße Pulver war sehr gut in Wasser redispergierbar. Die so hergestellte Dispersion hatte die gleichen hervorragenden anwendungsbedingten Eigenschaften wie die ursprüngliche Dispersion.

### e) Trockenzubereitung für Außenanstriche

Durch übliches Vermischen von
- 73 kg Calcium-Magnesium-Carbonat (Kreide)
- 5,0 kg des Polymerisat-Pulvers gemäß Stufe d)
- 3,0 kg einer Mischung aus 95 Gew.-% Titandioxid und 2,5 Gew.-% Aluminiumoxid sowie 2,5 Gew.-% Siliciumdioxid als Weißpigment
- 2,0 kg Calciumoxid zur Bildung schwerlöslicher Salze
- 2,0 kg Caprolactam als Filmbildehilfsmittel
- 2,0 kg eines handelsüblichen pulverförmigen Entschäumers
- 0,3 kg Pigmentverteiler, bestehend aus 65 Gew.-% Natrium-metaphosphat und 35 Gew.-% Natrium-ortho-phosphat
- 0,2 kg Cellulose als Verarbeitungshilfsmittel.
wurde eine lagerstabile Trockenzubereitung hergestellt.

Unmittelbar vor Gebrauch wurde diese Zubereitung mit 15,5 kg Wasser zu einer gut streichfähigen Masse für den Außenanstrich angerührt. Diese Masse lieferte nach der Verarbeitung einen Anstrich von hoher Wasserfestigkeit.

## Patentansprüche

1. Wäßrige Polymerisat-Dispersionen die keine wasserlösliche Epoxidverbindung aufweisen, enthaltend
I als disperse Phase ein filmbildendes Dispersionspolymerisat und
II in der wäßrigen Phase 5 bis 40 Gew.-%, bezogen auf die Gesamttrockenmasse an I und II, eines ganz oder teilweise neutralisierten wasserlöslichen Copolymerisates aus
a) 50 bis 80 mol-% einer olefinisch ungesättigten Mono- oder Dicarbonsäure, eines Anhydrids dieser Säuren oder eines Gemisches dieser Monomeren,
b) 20 bis 50 mol-% eines C₃- bis C₁₂-Alkens, Styrol oder eines Gemisches dieser Monomeren und
c) 0 bis 10 mol-% weiteren radikalisch polymerisierbaren Monomeren.

2. Wäßrige Polymerisat-Dispersionen nach Anspruch 1, enthaltend als Copolymerisat II ein Copolymerisat aus 50 bis 80 mol-% Maleinsäureanhydrid und 20 bis 50 mol-% Diisobuten.

3. Wäßrige Polymerisat-Dispersionen nach Anspruch 1, enthaltend als Copolymerisat II ein Copolymerisat aus 20 bis 50 mol-% Styrol und 50 bis 80 mol-% Acrylsäure.

4. Wäßrige Polymerisat-Dispersionen nach den Ansprüchen 1 bis 3, in denen das Copolymerisat II ganz oder teilweise mit einer basischen Natriumverbindung oder mit Ammonika neutralisiert ist.

5. Polymerisat-Pulver, erhältlich durch Sprühtrocknung von wäßrigen Polymerisatdispersionen, die enthalten
I als disperse Phase ein filmbildendes Dispersionspolymerisat und
II in der wäßrigen Phase 5 bis 40 Gew.-%, bezogen auf die Gesamttrockenmasse an I und II, eines ganz oder teilweise neutralisierten wasserlöslichen Copolymerisates aus
a) 50 bis 80 mol-% einer olefinisch ungesättigten Mono- oder Dicarbonsäure, eines Anhydrids dieser Säuren oder eines Gemisches dieser Monomeren,
b) 20 bis 50 mol-% eines C₃- bis C₁₂-Alkens, Styrol oder eines Gemisches dieser Monomeren und
c) 0 bis 10 mol-% weiteren radikalisch polymerisierbaren Monomeren.

6. Polymerisat-Pulver nach Anspruch 5, enthaltend als Copolymerisat II ein Copolymerisat aus 50 bis 80 mol-% Maleinsäureanhydrid und 20 bis 50 mol-% Diisobuten.

7. Polymerisat-Pulver nach Anspruch 5, enthaltend als Copolymerisat II ein Copolymerisat aus 20 bis 50 mol-% Styrol und 50 bis 80 mol-% Acrylsäure.

8. Polymerisat-Pulver nach den Ansprüchen 5 bis 7, in denen das Copolymerisat II ganz oder teilweise mit einer basischen Natriumverbindung oder mit Ammonik a neutralisiert ist.

9. Verwendung der wäßrigen Polymerisat-Dispersionen gemäß den Ansprüchen 1 bis 4 oder von Dispersionen, die durch Redispergierung der Polymerisat-Pulver gemäß den Ansprüchen 5 bis 8 hergestellt worden sind, als Klebstoffe oder als Bindemittel für Kalk und/oder Zement enthaltende Kunststoffputze und Anstrichstoffe.

10. Trockenzubereitung für die Herstellung gebrauchsfertiger wäßriger Kunststoffputze, enthaltend ein Polymerisat-Pulver gemäß der Ansprüche 5 bis 8 sowie Kalk und/oder Zement.

11. Verwendung der Polymerisat-Pulver gemäß der Ansprüche 5 bis 8 als Trockenklebstoff oder zur Herstellung von Trockenklebstoff enthaltenden Zubereitungen.

12. Trockenzubereitung für die Herstellung gebrauchsfertiger Klebstoffe enthaltend ein Polymerisat-Pulver gemäß der Ansprüche 5 bis 8.

## Claims

1. An aqueous polymer dispersion which does not contain a water-soluble epoxide compound, containing,
I as the disperse phase, a film-forming dispersion polymer and
II in the aqueous phase, from 5 to 40% by weight, based on the total dry mass of I and II, of a completely or partially neutralized water-soluble copolymer of
a) from 50 to 80 mol % of an olefinically unsaturated mono- or dicarboxylic acid, of an anhydride of these acids or of a mixture of these monomers,
b) from 20 to 50 mol % of a C₃-C₁₂-alkene, of styrene or of a mixture of these monomers and
c) from 0 to 10 mol % of further monomers which can be subjected to free radical polymerization.

2. An aqueous polymer dispersion as claimed in claim 1, containing, as copolymer II, a copolymer of 50 to 80 mol % of maleic anhydride and from 20 to 50 mol % of diisobutene.

3. An aqueous polymer dispersion as claimed in claim 1, containing, as copolymer II, a copolymer of from 20 to 50 mol % of styrene and from 50 to 80 mol % of acrylic acid.

4. An aqueous polymer dispersion as claimed in any of claims 1 to 3, wherein the copolymer II is completely or partially neutralized with a basic sodium compound or with ammonia.

5. A polymer powder, obtainable by spray-drying an aqueous polymer dispersion which contains,
I as the disperse phase, a film-forming dispersion polymer and
II in the aqueous phase, from 5 to 40% by weight, based on the total dry mass of I and II, of a completely or partially neutralized water-soluble copolymer of
a) from 50 to 80 mol % of an olefinically unsaturated mono- or dicarboxylic acid, of an anhydride of these acids or of a mixture of these monomers,
b) from 20 to 50 mol % of a C₃-C₁₂-alkene, of styrene or of a mixture of these monomers and
c) from 0 to 10 mol % of further monomers which can be subjected to free radical polymerization.

6. A polymer powder as claimed in claim 5, containing, as copolymer II, a copolymer of from 50 to 80 mol % of maleic anhydride and from 20 to 50 mol % of diisobutene.

7. A polymer powder as claimed in claim 5, containing, as copolymer II, a copolymer of from 20 to 50 mol % of styrene and from 50 to 80 mol % of acrylic acid.

8. A polymer powder as claimed in any of claims 5 to 7, wherein the copolymer II is completely or partially neutralized with a basic sodium compound or with ammonia.

9. The use of an aqueous polymer dispersion as claimed in any of claims 1 to 4 or of a dispersion which has been prepared by redispersing a polymer powder as claimed in any of claims 5 to 8, as an adhesive or as a binder for lime- and/or cement-containing plastics renders and coating materials.

10. A dry formulation for the production of ready-to-use aqueous plastics renders, containing a polymer powder as claimed in any of claims 5 to 8 and lime and/or cement.

11. The use of a polymer powder as claimed in any of claims 5 to 8 as a dry adhesive or for the preparation of formulations containing a dry adhesive.

12. A dry formulation for the preparation of ready-to-use adhesives containing a polymer powder as claimed in any of claims 5 to 8.

## Revendications

1. Dispersions aqueuses de polymères qui ne présentent pas de composé époxyde soluble dans l'eau, contenant :
I à titre de phase dispersée, un polymère en dispersion filmogène, et
II dans la phase aqueuse, 5 à 40% en poids, par rapport à la masse sèche totale de I et de II, d'un copolymère soluble dans l'eau et totalement ou partiellement neutralisé, constitué de
a) 50 à 80% molaires d'un acide monocarboxylique ou dicarboxylique oléfiniquement insaturé, d'un anhydride de ces acides, ou d'un mélange de ces monomères,
b) 20 à 50% molaires d'un alcène en C₃ à C₁₂, de styrène, ou d'un mélange de ces monomères, et
c) 0 à 10% molaires d'autres monomères polymérisables par voie radicalaire.

2. Dispersions aqueuses de polymères suivant la revendication 1, contenant, à titre de copolymère II, un copolymère constitué de 50 à 80% molaires d'anhydride de l'acide maléique et de 20 à 50% molaires de diisobutène.

3. Dispersions aqueuses de polymères suivant la revendication 1, contenant, à titre de copolymère II, un copolymère formé de 20 à 50% molaires de styrène et de 50 à 80% molaires d'acide acrylique.

4. Dispersions aqueuses de polymères suivant l'une quelconque des revendications 1 à 3, dans lesquelles le copolymère II est neutralisé totalement ou partiellement par un composé du sodium alcalin, ou par de l'ammoniac.

5. Poudres de polymères, que l'on peut obtenir par le séchage par pulvérisation de dispersions aqueuses de polymères, qui contiennent :
I à titre de phase dispersée, un polymère en dispersion filmogène, et
II dans la phase aqueuse, 5 à 40% en poids, par rapport à la masse sèche totale de I et de II, d'un copolymère soluble dans l'eau et totalement ou partiellement neutralisé, constitué de
a) 50 à 80% molaires d'un acide monocarboxylique ou dicarboxylique oléfiniquement insaturé, d'un anhydride de ces acides, ou d'un mélange de ces monomères,
b) 20 à 50% molaires d'un alcène en C₃ à C₁₂, de styrène, ou d'un mélange de ces monomères, et
c) 0 à 10% molaires d'autres monomères polymérisables par voie radicalaire.

6. Poudres de polymères suivant la revendication 5, contenant, à titre de copolymère II, un copolymère constitué de 50 à 80% molaires d'anhydride de l'acide maléique et de 20 à 50% molaires de diisobutène.

7. Poudres de polymères suivant la revendication 5, contenant, à titre de copolymère II, un copolymère constitué de 20 à 50% molaires de styrène et de 50 à 80% molaires d'acide acrylique.

8. Poudres de polymères suivant l'une quelconque des revendications 5 à 7, dans lesquelles le copolymère II est neutralisé totalement ou partiellement par un composé du sodium alcalin, ou par de l'ammoniac.

9. Utilisation des dispersions aqueuses de polymères suivant l'une quelconque des revendications 1 à 4, ou les dispersions qui ont été préparées par la redispersion de poudres de polymères suivant l'une quelconques des revendications 5 à 8, à titre de colles ou de liants, à titre de peintures et d'enduits synthétiques contenant de la chaux et/ou du ciment.

10. Préparation sèche pour la fabrication d'enduits synthétiques aqueux prêts à l'emploi, contenant une poudre de polymère suivant l'une quelconque des revendications 5 à 8, ainsi que de la chaux et/ou du ciment.

11. Utilisation des poudres de polymères suivant l'une quelconque des revendications 5 à 8, à titre de colle à sec ou de colle sèche, ou pour la fabrication de préparations contenant une colle à sec ou colle sèche.

12. Préparation sèche pour la fabrication de colles prêtes à l'emploi contenant une poudre de polymère suivant l'une quelconque des revendications 5 à 8.
